# EUROPEAN PATENT APPLICATION

(11) **EP 4 711 275 A1**
(43) Date of publication of application: **18.03.2026**
(21) Application number: 24461617.3
(22) Date of filing: 13.09.2024
(51) Int. Cl.: B64D 11/06, B60N 2/015, F16B 21/04

(54) **RELEASABLE MOUNTING FITTING**

(71) Applicant: B/E Aerospace, Inc., Winston Salem, NC 27105 (US)
(72) Inventor: KALISZCZYK, Piotr Krzysztof, 51-317 Wroclaw (PL); CHODYNIECKI, Marcin Adam, 51-317 Wroc aw (PL); KOLODZIEJCZAK, Marcin Szymon, 51-317 Wroclaw (PL)
(74) Representative: Dehns

(57) **Abstract**

A mounting fitting for removably mounting an object to a surface, the mounting fitting comprising a first portion (11) configured to be attached to the object, in use, and a second portion (12) configured to be attached to the surface, in use, and further comprising a locking and release mechanism (13) configured to releasably lock the first portion relative to the second portion, the locking and release mechanism comprising one or more pins (111) extending radially from the first portion (11), a rotational knob (130) located between the first portion (11) and the second portion (12) via a pre-loaded spring (135) and having defined therein a corresponding one or more L-shaped grooves (133) configured to lockingly receive the one or more pins in the one or more grooves when the knob is in a first rotational position, the rotational knob (130) being rotatable relative to first and second fitting portions (11, 12) to a second rotational position in which the one or more pins can be removed axially from the one or more grooves to remove the first fitting portion (11) from the second fitting portion (12).

## Description

### TECHNICAL FIELD

The present disclosure concerns fittings for mounting items to a floor or other platform, such as, but not exclusively, for mounting a seat in a vehicle or aircraft.

### BACKGROUND

There is, in many applications, a need to removably mount and secure an item to a platform or floor in a particular orientation. In some situations, it may be desired to mount the object in different orientations according to circumstances. One example, is seating used in vehicles or aircraft, including helicopters. Seats are typically mounted to the floor or platform of the vehicle/aircraft using a fitting attached to a lower part of the seat which slide into and are secured in tracks provided on the floor/platform. The fittings and tracks may be configured to allow sliding movement of the seat along the track to an appropriate position and locking systems may be provided to releasably secure the seat at the required position along the track. Such tracks are usually arranged to align with/extend longitudinally to or be orthogonal to/extend laterally to the direction of motion - i.e. the driving or flight direction. There may be a need to remove the seat from the floor, sometimes very quickly. Typically, this is done by either removing the fasteners that attach the seat to the fitting or by removing the entire fitting with the seat attached. This can, however, require specialist tools and can be time consuming.

Further, in some cases, multiple configurations are provided so that the direction of the seats can be changed as required. Typically, to change the orientation of a seat, a different fitting needs to be selected according to the orientation, and tools are required to undo and attach the appropriate fittings. This can be complex and time intensive and requires special parts and fitting and tools to change the seat orientation. Seats are just one example of objects that may need to be removably mounted to a platform, and possibly in different orientations. There is a desire for an improved mounting system that simplifies mounting an object to a platform (which, hereinafter, includes a floor) in a manner in which it can be quickly and easily removed and/or changed to a desired orientation.

### SUMMARY

Accordingly, there is provided a mounting fitting for removably mounting an object to a surface, the mounting fitting comprising a first portion configured to be attached to the object, in use, and a second portion configured to be attached to the surface, in use, and further comprising a locking and release mechanism configured to releasably lock the first portion relative to the second portion, the locking and release mechanism comprising one or more pins extending radially from the first portion, a rotational knob located between the first portion and the second portion via a pre-loaded spring and having defined therein a corresponding one or more L-shaped grooves configured to lockingly receive the one or more pins in the one or more grooves when the knob is in a first rotational position, the rotational knob being rotatable relative to first and second fitting portions to a second rotational position in which the one or more pins can be removed axially from the one or more grooves to remove the first fitting portion from the second fitting portion.

The mounting fitting may further comprise a pin guide located within the knob and rotationally fixed relative to the second portion, the pin guide having one or more recesses to receive the one or more pins.

The mounting fitting may have two or more pins, and where the orientation is also to be variable, four pins spaced 90 degrees apart, and a corresponding number of grooves.

Also provided is a vehicle seat system, such as an aircraft seat system incorporating such a mounting system.

### BRIEF DESCRIPTION

Examples of the mounting system according to this disclosure will now be described with reference to the drawings. It should be noted that these are examples only and variations are possible within the scope of the claims. In particular (but not only) the examples are described with reference to mounting a vehicle/aircraft seat to a floor or platform, but it is feasible that the mounting system of this disclosure could also be used for mounting other objects to a floor or platform or similar surface.
Figure 1 is an isometric view of a releasable mounting fitting according to the disclosure.
Figure 2 is a side sectional view of a fitting such as shown in Fig. 1.
Figure 3 is a top sectional view of a fitting such as shown in Fig. 1.
Figure 4 shows the fitting of Figs. 1 to 3 in a locked orientation.
Figure 5 shows the fitting in an unlocked orientation.
Figure 6 is an exploded view of the fitting shown in Figs. 1 to 5.
Figures 7A, 7B and 7C are provided to illustrate operation of a fitting such as shown in Figs. 1 to 6.

### DETAILED DESCRIPTION

As mentioned above, there is often a need for an object to be removably mounted to a surface or platform in a secure manner but in such a way that it can be quickly and easily removed and/or changed to different orientations relative to the surface. An example is an aircraft seat mounted to the floor/platform of the aircraft. It is sometimes desired to remove a seat that has been mounted to the floor and/or to change the orientation of the seat between being oriented facing in or against the direction of flight (i.e. longitudinally) and being oriented facing across the aircraft i.e. longitudinally. To mount such seats, typically, rails or tracks are provided on the floor or platform and a fitting is provided to be attached, by fasteners, to the seat, on one side, and to locate in the track on the other side. To remove the seat completely, typically the fasteners connecting the seat to the fitting need to be unfastened or the entire fitting with the seat attached needs to be removed from the tracks. Further, if a seat is set to be mounted longitudinally, the fitting will be of a given orientation to fit into the track. To mount the seat in another orientation e.g. laterally, a different fitting will be needed to be received in the track in a different orientation. The fittings, therefore, need to be switched out using tools and this is time and labour intensive.

The mounting fitting according to this disclosure allows a single releasable fitting to be used that can be easily released by separating the part attached to the object (e.g. seat) from the part of the fitting attached to the surface (e.g. floor/platform/tracks) using a simple manual operation without the need for tools and, further, in some examples, that can be easily moved from one orientation to another by rotation of the part of the fitting attached to the seat (or other object to be mounted) relative to the part of the fitting located on the surface/in the track. In this way, the mounting of the seat relative to the track can be easily released or varied by rotation of part of the fitting relative to the other part of the fitting.

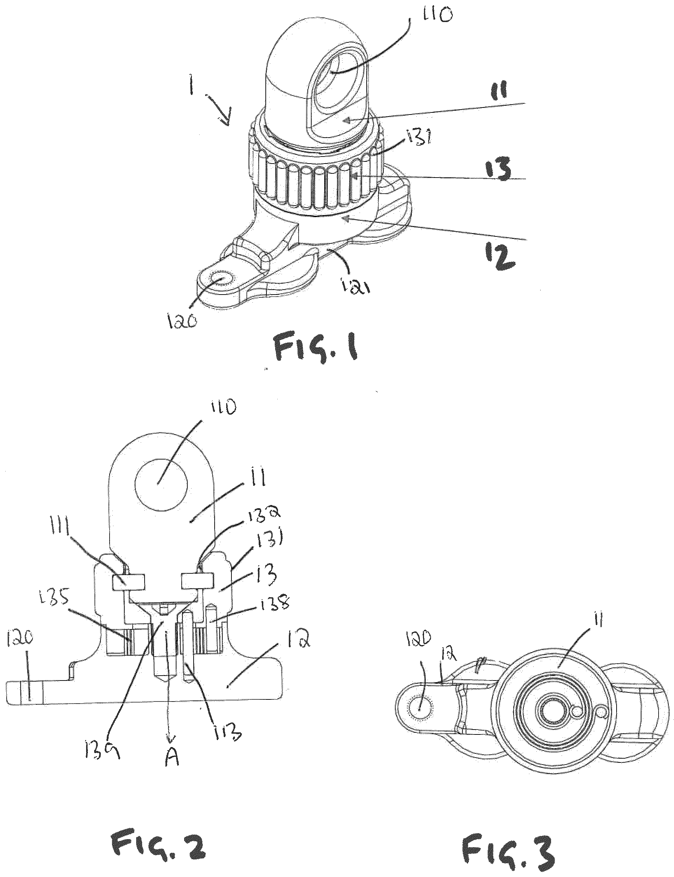

An example of the mounting fitting 1 of this disclosure is shown in Fig. 1. The mounting fitting 1, shown in Figs. 1 to 7, comprises a first portion 11 configured to be fixed to the seat or other object to be mounted and a second portion 12 arranged to be attached to the surface, and a locking and release mechanism 13 to selectively lock and release the first portion 11 relative to the second portion 12. In some examples, the locking and release mechanism 13 is also configured to change the orientation of the first portion 11 relative to the second portion 12.

In the example shown, the first portion 11 is in the form of a flange or bracket or other fitting shaped or configured to be connected to the seat. In the example shown, the first portion is provided with a hole 110 therethrough. This can be connected to the seat e.g. by a bolt or other fastener.

The second portion 12 is in the form of a housing for the first part. In this example, the second part is a substantially cylindrical or cup-type housing and the first portion is accommodated therein and extends therefrom, via the locking and release mechanism 13 as will be described further below. The second portion 12 is configured to be mounted, in use, to a surface or floor or a track. It may be configured to be secured in a selected position along the rack e.g. be providing a fastener through a hole 120 in the fastener that engages in the floor/track. The second portion may be arranged such that it can be slid or guided along the track groove until a selected position is reached on the track and then secured in place. In other examples, it is possible that the second portion is only able to be secured at a single location on the track.

In the example shown, the second portion 12 has an integrated rail 121 that, in use, locates in a track groove. The track rail may be provided with means for securing the second portion (and, hence, the mounting fitting 1) relative to the track. For example, the rail may have a hole therein by means of which it can be secured to the rail by a bolt, pin, screw or other fastener passing through a hole 120 in the fitting.

The groove in the track may be a simple linear groove along which the mounting system can slide. The groove may, however, be provided with discrete locking portions where the mounting system can be secured to the track. For example, the track may have discrete wider portions along the groove where holes are provided in the track such that when holes of the rail 121 of the mounting fitting 1 align with the holes in the track, the mounting system can be secured relative to the track by a screw, pin etc through both holes.

The locking and release mechanism 13 is a rotatable mechanism which allows the first portion 11 to be removable from and, in examples, rotated relative to the second portion 12, which means that a seat can be quickly and easily removed and, in examples, quickly and easily mounted in two different floor configurations, namely along or perpendicular (or some other selected angle) to the direction along which the track extends. In one example, the first portion 11 has two distinct positions or orientations relative to the second portion which are essentially at 90 degrees to each other as described further below.

The rotational locking and release mechanism 13 of the mounting fitting will now be described with reference to Figs. 2 to 7.

The mounting fitting 1 may comprise, as mentioned above, a first portion 11 and a second portion 12. The first portion 11 is, again, shown as a flange with an attachment hole 110 for attachment to the seat although other configurations and means of attachment are also possible. The second portion 12 is, again, shown as a housing having an recess 122 to receive the locking and release mechanism 13.

The locking and release mechanism comprises a rotational knob 130 which is rotatably mounted to the second portion 12 of the fitting 1 and which is configured to receive the first portion 11. The rotational known 130 is designed to be rotated manually by a user, preferably with one hand to simplify operation and may be provided with a knurled or textured outer surface 131 to provide for increased grip. The knob is rotatable about an axis A being an axis extending through the first portion, the knob and the second portion. The knob 130 has, on its radially inner surface 132 one or more L-shaped grooves 133 configured to receive respective one or more pins 111 provided on a part of the first portion 11 of the fitting that is received in the knob 130. The one or more pins 111 extend radially outwards from the first portion 11 such that, when they are aligned with the one or more grooves 133 in the knob, they engage in the grooves. As described further below, the grooves provided a so-called bayonet fitting together with the pins 111.

A spring 135 is provided between the second portion 12 and the knob 130 to bias the knob in the axial direction away from the second portion.

A guide 136 may be attached to the second portion 12 in a fixed, not-rotational manner to guide the pins 111 and is shaped with one or more recesses 137 configured to receive and guide the pins when they are aligned with the recesses.

Fastening means may be provided to secure the locking and release mechanism components relative to the fitting portions. For example, locking pins 138 may be provided around the spring 135 to secure the spring in place relative to the second portion of the fitting and/or a screw e.g. countersunk screw 139 may be provided to pass through all of the parts, when in place, to hold them together.

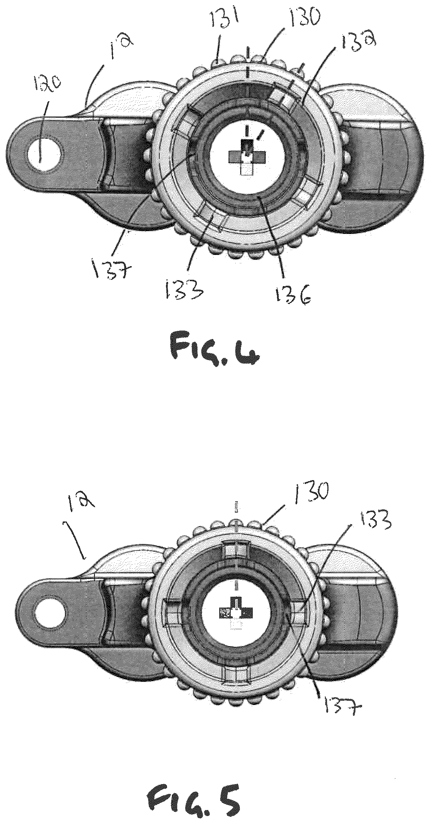

Operation of the locking and release mechanism will now be described further, with particular reference to Figs. 4 and 5 and 7A to 7C.

In the nominal position, when the fitting is mounted to the surface (the seat/object being fastened to the first portion of the fitting and the second portion of the fitting being attached to the surface), the one or more pins 111 on the first portion 11 are located in corresponding one or more recesses 137 in the guide 136 which are aligned with the one or more grooves 133 in the knob 130, and the knob 130 is biased by the spring 135 such that the one or more pins are secured in the base of the L-shape of the grooves. This locks the first portion both in the axial direction (i.e. against removal) and also in the circumferential direction relative to the second portion 12 of the fitting 1. This locking position is maintained by a pre-load of the spring 135.

To release the fitting so that the first portion (and any attached object) can be removed from the second portion, the user just needs to push the knob 130 down against the bias of the spring 135 and, at the same time, rotate the knob 130 relative to the second portion 12 (and, thus, relative to the pin guide 136 and the pins 111 of the first portion in the guide recesses 137. This rotation of the grooves 133 relative to the pins means that the one or more pins 111 travel along the base of the L-shape to the upright of the L-shape which, when this is aligned with the guide recesses, allows the pins 111 to be travel axially along and out of the grooves 133 and the pin guide recesses 137 and the first portion 11 to be removed from the rest of the fitting.

Figure 4 shows the relative positions of the components when the first portion is in its nominal, locked position in which the pins and the guide recesses 137 are not aligned with the grooves 133 on the inside of the knob 130.

Figure 5 shows the relative positions of the components when the knob 130 has been rotated about the axis A to bring the grooves 133 into alignment with the guide recesses 137 to allow the pins 111 (and, so, the first portion 11 of the fitting to be removed, axially, from the knob 130 and the second portion of the fitting.

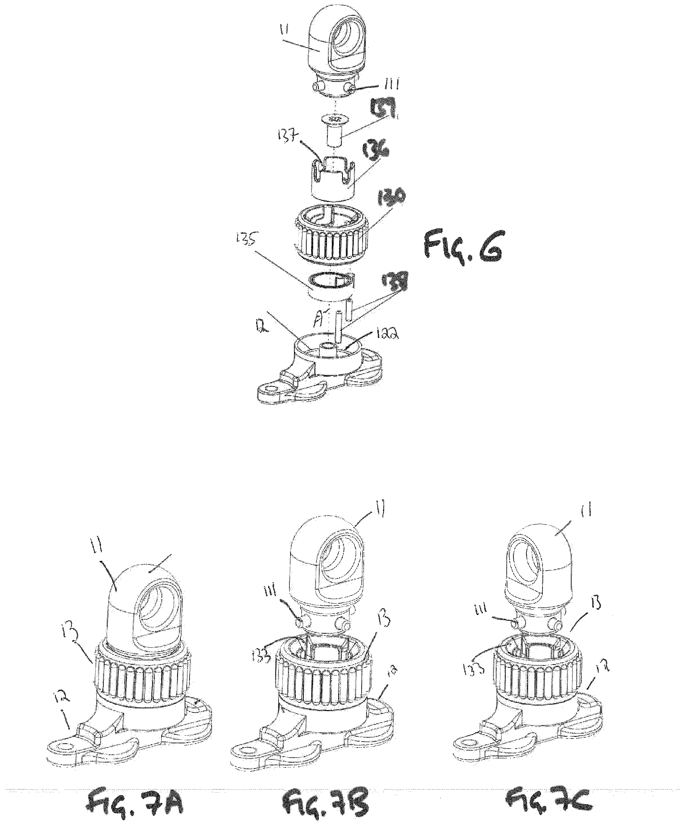

The principles of operation can, in theory, be achieved with just a single pin 111 and single corresponding recess 137 and groove 133. Additional stability is provided by having two opposing pins, guide recesses and grooves. Further, in an example such as shown in the drawings, the fitting may be configured to allow the first portion to be mounted at two different orientations relative to the second portion, as described above. In the example shown, the locking and release mechanism 13 comprises four pins 111 spaced 90 degrees apart around the first portion, with corresponding recesses 137 and grooves 133. The first portion can then be locked in two orthogonally different orientations by rotating the first portion by 90 degrees from a first orientation (Fig. 7A, 7B) and releasing the knob 130 to lock the first portion in the second orientation (Fig. 7C).

Using the fitting of this disclosure, a seat can be easily and quickly removed by a simple manual rotation of a knob and can also be easily and quickly mounted in a different orientation. The fitting has few parts, this increasing its reliability, simplicity and life and reducing its complexity, cost, weight and size, and also does not require special tools to remove or re-configure the seat/object.

## Claims

1. A mounting fitting for removably mounting an object to a surface, the mounting fitting comprising a first portion (11) configured to be attached to the object, in use, and a second portion (12) configured to be attached to the surface, in use, and further comprising a locking and release mechanism (13) configured to releasably lock the first portion relative to the second portion, the locking and release mechanism comprising one or more pins (111) extending radially from the first portion (11), a rotational knob (130) located between the first portion (11) and the second portion (12) via a pre-loaded spring (135) and having defined therein a corresponding one or more L-shaped grooves (133) configured to lockingly receive the one or more pins in the one or more grooves when the knob is in a first rotational position, the rotational knob (130) being rotatable relative to first and second fitting portions (11, 12) to a second rotational position in which the one or more pins can be removed axially from the one or more grooves to remove the first fitting portion (11) from the second fitting portion (12).

2. The mounting fitting of claim 1, further comprising a pin guide (136) located within the knob and rotationally fixed relative to the second portion, the pin guide having one or more recesses (137) to receive the one or more pins.

3. The mounting fitting of claim 1 or 2, having two or more pins (111) and a corresponding number of grooves (133).

4. The mounting fitting of claim 3, having four of said one or more pins (111) spaced 90 degrees apart from each other around the first portion (11) and corresponding four grooves (133).

5. The mounting fitting of and preceding claim, wherein the knob (130) has a knurled or textured outer surface.

6. The mounting fitting of any preceding claim, further comprising means for securing the spring (135) relative to the second portion and the knob (130).

7. The mounting fitting of claim 6, wherein the means for securing comprises one or more spring locking pins (138).

8. The mounting fitting of any preceding claim, further comprising a fastener for securing the guide and the spring relative to the second portion (12).

9. The mounting fitting of claim 8, the fastener being a countersunk screw (139).

10. The mounting fitting of any preceding claim, wherein the first portion (11) has a hole (13) therethrough for attachment to the object.

11. The mounting fitting of any preceding claim, wherein the second portion (12) comprises means for attachment to the surface, in use.

12. The mounting fitting of claim 11, wherein the means for attachment comprises a rail (121) formed integrally with and extending from the second portion.

13. The mounting fitting of any preceding claim, wherein the locking and release mechanism is configured to lock in two rotational positions separated by substantially 90 degrees.

14. The mounting fitting of any preceding claim, wherein the first portion (11) is configured to be attached to a vehicle seat and the second portion (12) is configured to be attached to a track (2) on a floor or platform.

15. A vehicle seat system comprising a seat, and a floor track arranged in a given orientation of a floor or platform of the vehicle, and a mounting system of any preceding claim wherein the first portion is attached to the seat and the second portion is attached to the track, and wherein the seat is removed from to the track by rotation of the knob (130).
